# EUROPEAN PATENT SPECIFICATION

(11) **EP 2 474 570 B1**
(45) Date of publication and mention of the grant of the patent: **20.11.2013**
(21) Application number: 11824840.0
(22) Date of filing: 18.05.2011
(51) Int. Cl.: C08L 23/08, F16L 11/06

(54) **MANUFACTURING METHOD FOR THERMOPLASTIC RESIN COMPOSITION**
HERSTELLUNGSVERFAHREN FÜR EINE THERMOPLASTISCHE HARZZUSAMMENSETZUNG
PROCÉDÉ DE FABRICATION D'UNE COMPOSITION DE RÉSINE THERMOPLASTIQUE

(30) Priority: 13.09.2010 JP 2010204312
(43) Date of publication of application: 11.07.2012
(73) Proprietor: The Yokohama Rubber Co., Ltd., Minato-ku Tokyo 105-8685 (JP)
(72) Inventor: KAWAGUCHI, Koichi, Hiratsuka-shi Kanagawa 254-8601 (JP); HARA, Yuichi, Hiratsuka-shi Kanagawa 254-8601 (JP)
(74) Representative: HOFFMANN EITLE
(86) International application number: PCT/JP2011/061920
(87) International publication number: WO 2012/035828

(56) References cited:
- EP-A1- 0 969 039
- EP-A1- 1 995 275
- EP-A1- 2 116 361
- EP-A1- 2 184 323
- WO-A1-2007/081323
- WO-A1-2007/083785
- WO-A1-2008/051253
- WO-A1-2009/123229
- JP-A- 1 006 043
- JP-A- 2006 514 140
- JP-A- 2010 132 850
- US-A- 6 079 465
- US-A1- 2006 223 941

## Description

### TECHNICAL FIELD

The present invention relates to a method for producing a thermoplastic resin composition, and more specifically, it relates to a method for producing a thermoplastic resin composition having excellent gas barrier properties as well as excellent low temperature durability and fatigue resistance, and a thermoplastic resin composition produced by the method, and a product obtained from the thermoplastic resin composition.

### BACKGROUND ART

Weight reduction of gas barrier structures used in applications which require the prevention of gas permeation (for example, pneumatic tires, gas or fluid transporting hoses, etc.) has heretofore been desired. For example, a rubber composition comprising as a main component a butyl-based rubber such as butyl rubber, halogenated butyl rubbers, etc., has been used in innerliners that are disposed on the inner surface of pneumatic tires for retaining the inner pressure of the tires. However, since rubber compositions comprising as a main component a butyl-based rubber have low gas barrier properties, it has been necessary to increase the thickness of the innerliner when forming it using such a rubber composition. Accordingly, using rubber compositions comprising as a main component a butyl-based rubber results in the problem of reducting the weight of tires in order to improve the fuel efficiency of automobiles.

To improve the inner pressure retention performance of pneumatic tires and to reduce the weight of pneumatic tires, providing the inner surface of a tire with a film comprising an ethylene-vinylalcohol copolymer (EVOH) laminated with an elastic surface layer or adhesive layer is proposed, for example, in Patent Documents 1 and 2. However, when an EVOH layer is used as a layer which comprises an innerliner for pneumatic tires, since EVOH has a significantly higher elastic modulus compared to rubber commonly used in pneumatic tires, if the EVOH layer is subjected to repeated flexure and tensile deformations during tire running, the gas barrier properties of the EVOH layer is decreased due to fatigue, and results a reduction in the inner-pressure retention performance of the tires. As a means for solving this problem, Patent Document 3 discloses a technique of using a resin composition in an innerliner for pneumatic tires, wherein the resin composition comprises 60 to 99 wt% of an ethylene-vinylalcohol copolymer having an ethylene content of 20 to 70 mol% and a saponification degree of 85% or more and 1 to 40 wt% of a hydrophobic plasticizer. In addition, Patent Document 4 discloses using a modified ethylene-vinylalcohol copolymer in an innerliner for pneumatic tires, wherein the modified ethylene-vinylalcohol copolymer is obtained by the reaction of 100 parts by weight of an ethylene-vinylalcohol copolymer having an ethylene content of 25 to 50 mol% with 1 to 50 parts by weight of an epoxy compound. Moreover, Patent Document 5 discloses a technique of using a tire innerliner comprising a phase comprising a resin composition comprising a matrix of the ethylene-vinylalcohol copolymer modified with an epoxy compound, as described above, and a soft resin dispersed in the matrix, wherein the soft resin having a Young's modulus at 23°C lower than that of the modified ethylene-vinylalcohol copolymer.

However, the inner-pressure retention performance after fatigue (after tire running) of the pneumatic tire innerliners obtained by the above techniques is not sufficient, and therefore it has been desired to further improve the fatigue resistance of tire innerliners, and thereby reduce the drop in the gas barrier properties due to fatigue. Also in the case of gas or liquid transporting hoses, weight reduction and reduction of the drop in the gas barrier properties due to fatigue have been desired. In addition, it is known that EVOH has a disadvantage that it is brittle, particularly at low temperature, and therefore improving the durability at low temperature of EVOH while making the most of the excellent gas barrier properties of EVOH, in resin compositions to which EVOH has been blended.

### PRIOR ART DOCUMENTS

### Patent Documents

- Patent Document 1:: Japanese Unexamined Patent Publication No. 1-314164
- Patent Document 2:: Japanese Unexamined Patent Publication No. 6-40207
- Patent Document 3:: Japanese Unexamined Patent Publication No. 2002-52904
- Patent Document 4:: Japanese Unexamined Patent Publication No. 2004-176048
- Patent Document 5:: Japanese Unexamined Patent Publication No. 2008-24217

### SUMMARY OF THE INVENTION

### PROBLEMS TO BE SOLVED BY THE INVENTION

Accordingly, the object of the present invention is to provide a method for producing a thermoplastic resin composition having excellent gas barrier properties as well as excellent low temperature durability and fatigue resistance.

### MEANS TO SOLVE THE PROBLEMS

The inventors have found that a thermoplastic resin composition having excellent gas barrier properties as well as low temperature durability and also having reduced drop in gas barrier properties due to fatigue can be obtained by melt-mixing together two resin compositions, i.e., a resin composition which has been obtained by dispersing an acid anhydride-modified or epoxy-modified rubber in ethylene-vinylalcohol copolymer resin and a resin composition obtained by crosslinking (dynamic crosslinking) a crosslinkable elastomer in a polyamide resin while melt-kneading them, and have completed the present invention.

According to the present invention a method for producing a thermoplastic resin composition is provided, comprising the steps of:
(I) melt-kneading (A) acid anhydride-modified or epoxy-modified rubber with (B) ethylene-vinylalcohol copolymer resin to prepare a first resin composition in which (A) acid anhydride-modified or epoxy-modified rubber is dispersed in (B) ethylene-vinylalcohol copolymer resin,
(II) crosslinking (C) crosslinkable elastomer while melt-kneading the crosslinkable elastomer with (D) polyamide resin to prepare a second resin composition in which crosslinked elastomer particles are dispersed in (D) polyamide resin, and
(III) melt-mixing together the first resin composition with the second resin composition.

According to the present invention, a thermoplastic resin composition obtained by such a method, and various products produced from the thermoplastic resin composition, for example, a pneumatic tire in which a film of the thermoplastic resin composition is used in an innerliner, and a hose in which a film of the thermoplastic resin composition is used in a gas barrier layer, are provided.

### MODE FOR CARRYING OUT THE INVENTION

The method for producing the thermoplastic resin composition of the present invention is characterized by carrying out kneading and mixing operations in two stages in which a first resin composition and a second resin composition are prepared separately (steps (I) and (II)), and the resulting first and second resin compositions are melt-mixed together (step (III)), as described above. By carrying out kneading and mixing operations in two stages in this way, it is possible to suppress the rate of change in gas permeability between before and after fatigue, compared to conventional methods in which kneading and mixing operations are conducted in a single stage.

Acid anhydride-modified or epoxy-modified rubber (A) used in the preparation of the first resin composition in step (I) is a rubber having an acid anhydride group or epoxy-containing group at a side chain or terminal of the rubber molecule. The presence of the acid anhydride group or epoxy-containing group in modified rubber (A) allows modified rubber (A) to exhibit compatibility to ethylene-vinylalcohol copolymer (EVOH) resin (B), and thereby allows modified resin (A) to be dispersed in EVOH resin (B). Examples of the acid anhydride group which may be present in modified rubber (A) include carboxylic acid anhydride groups such as maleic anhydride, and examples of the epoxy-containing group include epoxyethyl group, glycidyl group, glycidylether group, and the like. Modified rubber (A) can be prepared by a well-known technique. For example, a modified rubber having an acid anhydride group can be produced by reacting an acid anhydride and peroxide with a rubber. Also, a modified rubber having an epoxy group can be prepared by copolymerizing glycidyl methacrylate with a rubber. The copolymerization ratio is, but is not limited to, 10 to 50 parts by weight of glycidyl methacrylate with respect to 100 parts by weight of the rubber. Preferred examples of modified rubber (A) include ethylene-a-olefin copolymers and the acid anhydride-modified products and epoxy-modified products of their derivatives (for example, acid anhydride-modified products of ethylene-propylene copolymer, acid anhydride-modified products of ethylene-butene copolymer), ethylene-unsaturated carboxylic acid copolymers and the acid anhydride-modified products and epoxy-modified products of their derivatives (for example, ethylene-acrylic acid copolymer, ethylene-methacrylic acid copolymer, ethylene-methyl acrylate copolymer, ethylene-methyl methacrylate copolymer, etc.). One of the modified resins described above may be used, or two or more of the modified resins described above may be used in combination.

Ethylene-vinylalcohol copolymer (EVOH) resin (B) used in the method for producing the thermoplastic resin composition of the present invention can be prepared by a well-known technique, for example, by polymerizing ethylene with vinyl acetate to prepare ethylene-vinyl acetate copolymer (EVA), and hydrolyzing the resulting EVA. The EVOH resin preferably has an ethylene content of 25 to 50 mol%, in view of fatigue resistance and meltforming properties. In addition, the EVOH resin preferably has a saponification degree of 95% or more, and more preferably 98% or more. Examples of commercially available EVOH resins include, for example, Soarnol H4815B (ethylene unit content: 48 mol%), Soarnol H4412B (ethylene unit content: 44 mol%), Soarnol E3808B (ethylene unit content: 38 mol%), and Soarnol D2908 (ethylene unit content: 29 mol%) manufactured by The Nippon Synthetic Chemical Industries Co. Ltd., EVAL-G156B (ethylene unit content: 48 mol%), EVAL-E171B (ethylene unit content: 44 mol%), EVAL-H171B (ethylene unit content: 38 mol%), EVAL-F171B (ethylene unit content: 32 mol%), and EVAL-L171B (ethylene unit content: 27 mol.%) manufactured by Kuraray Co., Ltd. A single EVOH resin may be used, or two or more EVOH resins may be used in combination.

In the first resin composition which is obtained by melt-kneading modified rubber (A) with EVOH resin (B) to disperse modified resin (A) in EVOH resin (B), modified rubber (A) which comprises a dispersed phase, while EVOH resin (B) which is thermoplastic comprises a continuous phase, and therefore the first resin composition exhibits thermoplastic properties, and thereby it is possible to process the first resin composition as in conventional thermoplastic resins. The amount of modified rubber (A) is typically 70 to 180 parts by weight, and preferably 75 to 145 parts by weight, with respect to 100 parts by weight of EVOH resin (B). If the amount of acid anhydride-modified or epoxy-modified rubber (A) is less than 70 parts by weight with respect to 100 parts by weight of EVOH resin (B), sufficient durability cannot be obtained, and if the amount of acid anhydride-modified or epoxy-modified rubber (A) is more that 180 parts by weight with respect to 100 parts by weight of EVOH resin (B), modified rubber (A) forms a co-continuous phase with EVOH resin (B), or modified rubber (A) forms a continuous phase and EVOH resin (B) forms a dispersed phase, and therefore the resulting first resin composition does not exhibit thermoplastic properties, thereby makes it difficult to melt-mix the first resin composition with the second resin composition thereafter. In the first resin composition, modified rubber (A) dispersed in EVOH resin (B) typically has an average particle size of about 1 to 7 µm.

In addition to modified rubber (A) and EVOH resin (B), optional additives such as compatibilizers, antioxidants, crosslinking agents, vulcanization accelerators, vulcanization accelerator activators, vulcanization retarders, plasticizers, fillers, coloring agents, and processing aids, may be used in the first resin composition, if needed, insofar as the object of the present invention is not diminished. For example, low temperature durability can be further improved by adding a crosslinking agent (or vulcanizing agent) to the first resin composition. A person with ordinary skill in the art can appropriately select the type and amount of the crosslinking agent (or vulcanizing agent) used in the preparation of the first resin composition, depending on the type of the modified rubber and the conditions of the dynamic crosslinking. Examples of crosslinking agents include compounds having two or more amino groups, for example, 2,2-dithiodianiline, 4,4-dithiodianiline, 2,2-diaminodiphenylether, 3,3-diaminodiphenylether, 4,4-diaminodiphenylether, 3,3'-diaminodiphenylsulfone, etc. The amount of the crosslinking agent is typically 0.1 to 10 parts by weight with respect to 100 parts by weight of modified rubber (A).

The first resin composition can be prepared by melt-kneading modified rubber (A), EVOH resin (B), and any optional additives using a well-known kneading machine such as kneader, Banbury mixer, single screw kneading extruder, twin-screw kneading extruder, etc., and the preparation of the first resin composition is preferably carried out using a twin-screw kneading extruder, in view of high productivity. Although the kneading conditions depend on the types and amounts of modified rubber (A), EVOH resin (B), and optional additives, melt-kneading is generally conducted for about 1 minute to about 10 minutes at a temperature of about 200 to about 250°C. The lower limit of the melt-kneading temperature is at least equal to or more than the melting temperature of EVOH resin (B), and is typically about 140°C to about 250°C. The dynamic crosslinking time (residence time) is typically from about 30 seconds to about 10 minutes.

Separately from the first resin composition, the second resin composition in which crosslinked elastomer particles are dispersed in polyamide resin (D) is prepared by crosslinking (dynamically vulcanizing) crosslinkable elastomer (C) while melt-kneading the crosslinkable elastomer with polyamide resin (D) (step (II)).

Examples of the crosslinkable elastomer (C) used in the preparation of the second resin composition include crosslinkable elastomers such as diene-based rubbers and hydrogenation products thereof (for example, natural rubber (NR), isoprene rubber (IR), epoxidized natural rubber, styrene-butadiene rubber (SBR), butadiene rubber (BR) (high-cis BR and low-cis BR), nitrile rubber (NBR), hydrogenated NBR, hydrogenated SBR), olefin-based rubbers (for example, ethylene-propylene rubber (EPDM, EPM), maleic acid-modified ethylene-propylene rubber (M-EPM), butyl rubber (IIR), copolymers of isobutylene and an aromatic vinyl or diene monomer), acrylic rubbers (ACM), halogen-containing rubbers (for example, bromobutyl rubber (Br-IIR), chlorobutyl rubber (Cl-IIR), brominated isobutylene-paramethylstyrene copolymer (Br-IPMS), chloroprene rubber (CR), hydrin rubber (CHR·CHC); chlorosulfonated polyethylene (CSM), chlorinated polyethylene (CM), maleic acid-modified chlorinated polyethylene (M-CM)), silicone rubbers (for example, methylvinylsilicone rubber, dimethylsilicone rubber, methylphenylvinylsilicone rubber), sulfur-containing rubbers (for example, polysulfide rubber), fluororubbers (for example, vinylidene fluoride-based rubbers, fluorine-containing vinylether-based rubbers, tetrafluoroethylene-propylene-based rubbers, fluorine-containing silicone rubbers, fluorine-containing phosphazene-based rubbers), thermoplastic elastomers (for example, styrene-based elastomers, olefin-based elastomers, and polyamide-based elastomers), and the like. The type of crosslikable elastomer (C) may be the same as that of modified rubber (A) described above (i.e., crosslinkable elastomer (C) may have the same chemical composition as that of modified rubber (A)) or may be different from that of modified rubber (A). One of the crosslinkable elastomers may be used, or two or more of the crosslinkable elastomers may be used in combination. In view of processability and durability, crosslinkable elastomer (C) is preferably selected from the group consisting of halogenated butyl rubbers, halogenated isoolefin-paramethylstyrene copolymers, and combinations thereof.

Examples of polyamide resin (D) include, for example, Nylon 6 (N6), Nylon 66 (N66), Nylon 46 (N46), Nylon 11 (N11), Nylon 12 (N12), Nylon 610 (N610), Nylon 612 (N612), Nylon 6/66 copolymer (N6/66), Nylon 6/66/610 copolymer (N6/66/610), Nylon MXD6, Nylon 6T, Nylon 6/6T copolymer, Nylon 66/PP copolymer, and Nylon 66/PPS copolymer. Among these polyamide resins, Nylon 6, Nylon 66, Nylon 6/66 copolymer, Nylon 11, Nylon 12, and Nylon MXD6 are preferably used, in view of processability and durability. One of the polyamide resins may be used, or two or more of the polyamide resins may be used in combination.

In the second resin composition, the amount of crosslinkable elastomer (C) is typically 70 to 180 parts by weight, and preferably 75 to 145 parts by weight, with respect to 100 parts by weight of polyamide resin (D). If the amount of crosslinkable elastomer (C) is less than 70 parts by weight with respect to 100 parts by weight polyamide resin (D), sufficient durability cannot be obtained, and if the amount of crosslinkable elastomer (C) is more than 180 parts by weight with respect to 100 parts by weight of polyamide resin (D), crosslinkable elastomer (C) forms a co-continuous phase with polyamide resin (D), or the crosslinkable elastomer (C) forms a continuous phase and polyamide resin (D) forms a dispersed phase, and therefore the second resin composition does not exhibit thermoplastic properties and is difficult to be melt-mixed with the first resin composition thereafter. In the second resin composition, the crosslinked elastomer particles dispersed in polyamide resin (D) typically have an average particle size of about 1 to 5 µm. The second resin composition is prepared by crosslinking crosslinkable elastomer (C) while melt-kneading crosslinkable elastomer (C) and polyamide resin (D) in the presence of a crosslinking agent and optional additives. Such a process is known in the art as a dynamic crosslinking process, and a crosslinkable elastomer and a polyamide resin which is thermoplastic are melt-kneaded by this process at a temperature which is equal to or more than the temperature at which the crosslinking by the crosslinking agent occurs, and therefore it is possible to crosslink the crosslinkable elastomer while finely dispersing the crosslinkable elastomer in the polyamide resin. In the second resin composition, crosslinked elastomer particles derived from crosslinkable elastomer (C) are present in the form of a finely dispersed state in the polyamide resin which comprises a continuous phase, and therefore the second resin composition can be processed as in conventional thermoplastic resins. The crosslinked elastomer particles typically have an average particle size of about 1 to 5 µm. The preparation of the second resin composition can be carried out using a well-known kneading machine such as kneader, Banbury mixer, single screw kneading extruder, twin-screw kneading extruder, etc., and the preparation of the first resin composition is preferably carried out using a twin-screw kneading extruder, in view of its high productivity. The lower limit of the dynamic crosslinking temperature may be at least equal to or more than the melting temperature of polyamide resin (C) and may be equal to and more than the temperature at which crosslinkable elastomer is crosslinkable, and the dynamic crosslinking temperature is typically about 200°C to about 250°C. The dynamic crosslinking time (residence time) is typically about 30 seconds to about 10 minutes.

A person with ordinary skill in the art can select the type and amount of the crosslinking agent (or vulcanizing agent) used in the preparation of the second resin composition, depending on the type of the crosslinkable elastomer and the conditions of the dynamic crosslinking. Examples of the crosslinking agent include zinc oxide, stearic acid, zinc stearate, sulfur, organic peroxide crosslinking agents, and compounds having two or more amino groups. The amount of the crosslinking agent is typically 0.1 to 10 parts by weight with respect to 100 parts by weight of crosslinkable elastomer (C). In addition, modified polyolefins, such as maleic anhydride-modified ethylene-ethyl acrylate copolymer and maleic anhydride-modified products such as ethylene-propylene copolymer, ethylene-butene copolymer, ethylene-hexene copolymer, and ethylene-octene copolymer, may be added as a compatibilizer during kneading of polyamide resin (D) and crosslinkable elastomer (C), in order to increase the compatibility of crosslinkable elastomer (C) to polyamide resin (D) in the second resin composition. The amount of such a modified polyolefin is not particularly limited, but is typically 2 to 20% by weight based on the total weight of crosslinkable elastomer (C).

In addition to crosslinkable elastomer (C), polyamide resin (D), and a crosslinking agent, optional additives such as compatibilizers, antioxidants, vulcanization accelerators, vulcanization accelerator activators, vulcanization retarders, plasticizers, fillers, coloring agents, and processing aids, may be used in the preparation of the second resin composition, if needed, as long as the object of the present invention is not diminished.

The thermoplastic resin composition of the present invention can be obtained by melt-mixing the first resin composition and the second resin composition that have been prepared separately as described above. The first resin composition and the second resin composition are typically melt-mixed at a weight ratio of from about 90:10 to about 10:90, preferably at a weight ratio of from about 80:20 to about 20:80. More preferably, the first resin composition and the second resin composition are melt-mixed such that the weight ratio of modified rubber (A) and crosslinkable elastomer (C) is from about 90:10 to about 10:90, and more preferably from about 70:30 to about 30:70. The melt-kneading of the first and second resin compositions can be carried out using a well-known kneading machine such as kneader, Banbury mixer, single screw kneading extruder, twin-screw kneading extruder, etc., and is preferably carried out using a twin-screw kneading extruder, in view of its high productivity. To accelerate the melt-mixing of the first and second resin compositions, it is preferable to shape the first and second resin compositions into pellets, granules, etc., prior to the melt-mixing of the first and second resin compositions. The melt-mixing of the first and second resin compositions may be carried out generally at a temperature which is equal to or more than the melting temperature of ethylene-vinylalcohol copolymer (A) which comprises the first resin composition, and which is equal to or more than the melting temperature of polyamide resin (D) which comprises the second resin composition, and is typically carried out at a temperature of from about 200°C to about 250°C, for a period of time (residence time) from about 30 seconds to about 5 minutes, depending on the types and amounts of EVOH resin (B), acid anhydride-modified or epoxy-modified rubber (A), polyamide resin (D), and crosslinkable elastomer (C) used.

The thermoplastic resin composition that has been melt-kneaded as described above may be extruded in molten state from a die attached to the outlet port of the twin-screw kneading extruder using a common method into a shape such as a film, sheet, or tube form, or may be extruded into the form of a strand and pelletized with a resin pelletizer, and subsequently the resulting pellets are formed into a film, sheet, or tube form using a common resin forming method such as inflation forming, calendar forming, extrusion forming, etc.

The thermoplastic resin composition of the present invention can be used in various applications, for example, applications such as pneumatic tires, gas or fluid transporting hoses, etc. The thermoplastic resin composition of the present invention exhibits excellent gas barrier properties as well as excellent low temperature durability and fatigue resistance, and therefore can suitably be used in applications such as pneumatic tire innerliners, hoses, etc.

Any conventional method may be used for manufacturing a pneumatic tire in which a film of the thermoplastic resin composition of the present invention is used in an innerliner. For example, the thermoplastic resin composition is formed into a film having a predetermined width and thickness, and this film is laminated onto a tire molding drum in cylindrical form, tire members such as a carcass layer, a belt layer, a tread layer, etc., are sequentially laminated thereon, and the resulting green tire is removed from the tire molding drum. Then, the green tire is vulcanized in accordance with a conventional procedure to manufacture a desired pneumatic tire in which a film of the thermoplastic resin composition of the present invention is used in an innerliner.

Any conventional method may be used for manufacturing a hose in which a film of the thermoplastic resin composition of the present invention is used in a gas barrier layer. For example, the thermoplastic resin composition of the present invention is extruded on a mandrel precoated with a releasing agent by an extruder in a crosshead extrusion manner to form an inner tube, and subsequently a reinforcing yarn or a reinforcing steel wire is braided on the inner tube by using a braiding machine to form a reinforcing layer, and a thermoplastic resin is extruded onto the reinforcing layer to form an outer tube. If needed, an additional thermoplastic resin and/or adhesive layer may be provided between the inner tube and the reinforcing layer and between the reinforcing layer and the outer tube. Finally, the mandrel is withdrawn to obtain a hose.

### EXAMPLES

The present invention will be further explained with reference to the following examples and comparative examples, and it should be understood that the scope of the present invention is not limited by these examples.

### Comparative Examples 1 to 7

The starting materials shown in Table 1 were introduced in the cylinder of a twin-screw kneading extruder (manufactured by The Japan Steel Works, Ltd.) from a starting material inlet port and were conveyed to a kneading zone set at a temperature of 230°C and a residence time of 2 minutes to melt-knead them, and the resulting melt-kneaded mixture was extruded from a die attached to the outlet port of the extruder into a strand form. The resulting extrudate in the form of a strand was pelletized with a resin pelletizer to obtain pellets of a thermoplastic resin composition.

### Examples 1 to 7

### (1) Preparation of a First Resin Composition:

The modified rubber, EVOH resin, and crosslinking agent shown in Table 2 were melt-kneaded by using a twin-axis kneading extruder (kneading zone temperature: 230°C, residence time: about 2 minutes) in the same manner as Comparative Examples 1 to 7, and the resulting melt-kneaded mixture was extruded from a die attached to the outlet port of the extruder into a strand form, and the resulting extrudate in the form a of strand was pelletized with a resin pelletizer to obtain pellets of a first resin composition.

### (2) Preparation of a Second Resin Composition:

The crosslinkable elastomer, polyamide resin, compatibilizer, zinc oxide, stearic acid, and zinc stearate, shown in Table 2 were melt-kneaded by using a twin-axis kneading extruder (kneading zone temperature: 230°C, residence time: about 2 minutes) in the same manner as Comparative Examples 1 to 7, and the resulting melt-kneaded mixture was extruded from a die attached to the outlet port of the extruder in the form of a strand, and the resulting extrudate in the form of a strand was pelletized with a resin pelletizer to obtain pellets of a second resin composition.

### (3) Melt-mixing of the first resin composition with the second resin composition:

The pellets of the first and second resin compositions obtained as described above were introduced into the cylinder of a twin-screw kneading extruder (manufactured by The Japan Steel Works, Ltd.) from a starting material inlet port and were conveyed to a kneading zone set at a temperature of 230°C and a residence time of about 2 minutes to melt-knead them, and the resulting melt-kneaded mixture was extruded from a die attached to the outlet port of the extruder into a strand form. The resulting extrudate in the form of a strand was pelletized with a resin pelletizer to obtain pellets of a thermoplastic resin composition of the present invention.

The characteristic properties of the thermoplastic resin compositions of Comparative Examples 1 to 7 and Examples 1 to 7 were evaluated by the following test methods:

### (1) Low Temperature Durability

A thermoplastic elastomer composition in the form of pellets was extruded by using a 40 mmφ single-screw extruder (manufactured by Pla Giken Co., Ltd.) equipped with a 200 mm wide T dice under constant conditions in which the temperature was set at 20°C higher than the melting point of the thermoplastic elastomer to form a sheet having an average thickness of 1 mm. Then, JIS No. 3 dumbbell shaped specimens were punched out and the resulting specimens were stretched repeatedly at -35°C and an extension ratio of 40%. The measurement was carried out 5 times, and the average value of the number of times at break was calculated.

### (2) Fatigue Resistance

A film was prepared from a thermoplastic resin composition in the form of pellets, as will be described in (a) below, and was evaluated for fatigue resistance by determining the rate of change in gas permeability, as will be described in (b) below.

### (a) Preparation of Film for Gas Permeability Measurement

A thermoplastic resin composition in the form of pellets was formed into a film having an average thickness of 0.15 mm by using a 40 mmφ single-screw extruder (manufactured by Pla Giken Co., Ltd.) equipped with a 400 mm wide T dice under extrusion conditions in which extrusion temperatures of Cl/C2/C3/C4/die=200/210/230/235/235°C, a chill roll temperature of 50°C, and a withdrawing speed of 3 m/min. Next, the resulting films were cut into a size of 20 cm length and 20 cm width, and dried at 150°C for 3 hours or more. Then, the starting materials other than the vulcanizing agent in the formulation shown in Table 3 were kneaded with a 1.7 liter Banbury mixer at a temperature of 70°C for 5 minutes to obtain a masterbatch, and thereafter the masterbatch was kneaded with the vulcanizing agent by using a 8 inches roll, and was shaped into a film having a thickness of 0.5 mm. The resulting unvulcanized rubber composition film was laminated on the dried thermoplastic resin composition film described above, and was vulcanized at 180°C for 10 minutes. The resulting laminate was cut to prepare specimens having a length of 11 cm and a width of 11 cm.

### (b) Rate of Change in Gas Permeability After Fatigue

The specimens prepared as described above were measured for gas permeability (before fatigue) of the thermoplastic resin composition film in accordance with JIS K7126-1, "Gas permeability test for plastic films and sheets (pressure difference method)" using air as a test gas at a test temperature of 30°C. Next, the specimens were subjected to fatigue by stretching repeatedly 1000,000 times under conditions of an extension ratio of 20%, 400 times per minute at room temperature. The specimens after fatigue were measured for gas permeability of the thermoplastic resin composition film, in the same manner as the gas permeability of the thermoplastic resin composition film before fatigue, and the gas permeability of the thermoplastic resin composition after fatigue was expressed as a percentage (%) with respect to the gas permeability of the thermoplastic resin composition film before fatigue.

The test results are shown in Tables 1 and 2 below.

**Table 1: Formulations (in parts by weight) and Test Results of the Compositions of Comparative Examples 1 to 7**

| | **Comp. Example 1** | **Comp. Example 2** | **Comp. Example 3** | **Comp. Example 4** | **Comp. Example 5** | **Comp. Example 6** | **Comp. Example 7** |
|---|---|---|---|---|---|---|---|
| Starting Materials | | | | | | | |
| Modified rubber⁽¹⁾ | 90.00 | 70.00 | 70.00 | 70.00 | 50.00 | 30.00 | 10.00 |
| Crosslinkable elastomer⁽²⁾ | 10.00 | 30.00 | 30.00 | 30.00 | 50.00 | 70.00 | 90.00 |
| EVOH⁽³⁾ | 73.17 | 56.91 | 56.91 | 56.91 | 40.65 | 24.39 | 8.13 |
| Polyamide resin⁽⁴⁾ | 8.00 | 24.00 | 24.00 | 24.00 | 40.00 | 56.00 | 72.00 |
| Compatibilizer⁽⁵⁾ | 1.00 | 3.00 | 3.00 | 3.00 | 5.00 | 7.00 | 9.00 |
| Crosslinking agent 1⁽⁶⁾ | - | - | 1.40 | - | - | - | - |
| Crosslinking agent 2⁽⁷⁾ | - | - | - | 1.40 | - | - | - |
| Zinc oxide⁽⁸⁾ | 0.05 | 0.15 | 0.15 | 0.15 | 0.25 | 0.35 | 0.45 |
| Stearic acid⁽⁹⁾ | 0.10 | 0.30 | 0.30 | 0.30 | 0.50 | 0.70 | 0.90 |
| Zinc stearate⁽¹⁰⁾ | 0.05 | 0.15 | 0.15 | 0.15 | 0.25 | 0.35 | 0.45 |
| Test Results | | | | | | | |
| Low temperature durability (×10³) | 55 | 45 | 50 | 50 | 35 | 30 | 20 |
| Rate of change in gas permeability after fatigue (%) | 160 | 150 | 150 | 150 | 140 | 130 | 130 |

**Table 2: Formulations (in parts by weight) and Test Results of the Compositions of Examples 1 to 7**

| | **Example 1** | **Example 2** | **Example 3** | **Example 4** | **Example 5** | **Example 6** | **Example 7** |
|---|---|---|---|---|---|---|---|
| Starting Materials of Resin Composition (C) | | | | | | | |
| Modified rubber⁽¹⁾ | 90.00 | 70.00 | 70.00 | 70.00 | 50.00 | 30.00 | 10.00 |
| EVOH⁽²⁾ | 73.17 | 56.91 | 56.91 | 56.91 | 40.65 | 24.39 | 8.13 |
| Crosslinking agent 1⁽³⁾ | - | - | 1.40 | - | - | - | - |
| Crosslinking agent 2⁽⁴⁾ | - | - | - | 1.40 | - | - | - |

| Starting Materials of Resin Composition (F) | | | | | | | |
|---|---|---|---|---|---|---|---|
| Crosslinkable elastomer⁽⁵⁾ | 10.00 | 30.00 | 30.00 | 30.00 | 50.00 | 70.00 | 90.00 |
| Polyamide resin⁽⁶⁾ | 8.00 | 24.00 | 24.00 | 24.00 | 40.00 | 56.00 | 72.00 |
| Compatibilizer⁽⁷⁾ | 1.00 | 3.00 | 3.00 | 3.00 | 5.00 | 7.00 | 9.00 |
| Zinc oxide⁽⁸⁾ | 0.05 | 0.15 | 0.15 | 0.15 | 0.25 | 0.35 | 0.45 |
| Stearic acid⁽⁹⁾ | 0.10 | 0.30 | 0.30 | 0.30 | 0.50 | 0.70 | 0.90 |
| Zinc stearate⁽¹⁰⁾ | 0.05 | 0.15 | 0.15 | 0.15 | 0.25 | 0.35 | 0.45 |

| Test Results | | | | | | | |
|---|---|---|---|---|---|---|---|
| Low temperature durability (×10³) | 65 | 70 | 75 | 80 | 80 | 85 | 85 |
| Rate of change in gas permeability after fatigue (%) | 150 | 130 | 130 | 130 | 120 | 120 | 120 |

| | | | | | | | |
|---|---|---|---|---|---|---|---|
| Footnote of Tables 1 and 2: (1) Maleic anhydride-modified ethylene-propylene rubber (Tafmer MH7020 manufactured by Mitsui Chemicals Inc.) (2) Brominated isobutylene-paramethylstyrene copolymer (Exxpro MDX89-4 manufactured by ExxonMobile Chemical Company) (3) Fthylene-vinylalcohol copolymer (H4815B manufactured by The Nippon Synthetic Chemical Industries Co., Ltd.) (4) Nylon 6/66 copolymer (5013B manufactured by Ube Industries, Ltd.) (5) Maleic acid-modified ethylene-ethyl acrylate copolymer (HPR AR201 manufactured by Mitsui DuPont Polychemical Co., Ltd.) (6) 3,3'-Diaminodiphenylsulfone (manufactured by Konishi Chemical Industry Co., Ltd.) (7) Tris(2-hydroxyethyl)isocyanurate (TANAC manufactured by Nissei Corporation) (8) Zinc oxide of JIS grade 3 manufactured by Seido Chemical Industry Co., Ltd. (9) Beads Stearic Acid manufactured by Nippon Oil & Fat Co., Ltd. (10) Manufactured by Sakai Chemical Industry Co., Ltd. | | | | | | | |

**Table 3: Formulation of Unvulcanized Rubber Composition**

| **Starting Materials** | **Amounts (parts by weight)** |
|---|---|
| Halogenated butyl rubber⁽¹⁾ | 100.0 |
| GPF carbon black⁽²⁾ | 30.0 |
| Wet silica⁽³⁾ | 20.0 |
| Aromatic oil⁽⁴⁾ | 7.5 |
| Zink oxide⁽⁵⁾ | 3.0 |
| Stearic acid⁽⁶⁾ | 1.0 |
| Sulfur⁽⁷⁾ | 1.0 |
| Vulcanization Accelerator⁽⁸⁾ | 1.5 |
| Total | 164.0 |

| | |
|---|---|
| Footnote: (1) BROMOBUTYL X2 manufactured by LANXESS Rubber Company (2) HTC#G manufactured by Nippon Steal Chemical Carbon Co., Ltd. (3) Zeosil^{™} 165GR manufactured by Rhodia (4) Extract No. 4S manufactured by Showa Shell Petroleum Co., Ltd. (5) Zinc oxide of JIS grade 3 manufactured by Seido Chemical Industry Co., Ltd. (6) Beads Stearic Acid YR manufactured by Nippon Oil & Fat Co., Ltd. (7) GOLDEN FLOWER fine sulfur powder, 150 mesh, manufactured by Tsurumi Chemical Industries, Co., Ltd. (8) Nocceler DM manufactured by Ouchi Shinko Chemical Industrial Co., Ltd. | |

A comparison of the test results in Tables 1 and 2 shows that the thermoplastic resin composition prepared in accordance with the present invention exhibit excellent gas barrier properties as well as excellent low temperature durability and fatigue resistance.

## Claims

1. A method for producing a thermoplastic resin composition, comprising the steps of:
(I) melt-kneading (A) acid anhydride-modified or epoxy-modified rubber with (B) ethylene-vinylalcohol copolymer resin to prepare a first resin composition in which (A) acid anhydride-modified or epoxy-modified rubber is dispersed in (B) ethylene-vinylalcohol copolymer resin,
(II) crosslinking (C) crosslinkable elastomer while melt-kneading the crosslinkable elastomer with (D) polyamide resin to prepare a second resin composition in which crosslinked elastomer particles are dispersed in (D) polyamide resin, and
(III) melt-mixing together the first resin composition with the second resin composition.

2. The method for producing a thermoplastic resin composition according to claim 1, in which (A) acid anhydride-modified or epoxy-modified rubber is selected from the group consisting of ethylene-α-olefin copolymers and the acid anhydride-modified products and epoxy-modified products of their derivatives, ethylene-unsaturated carboxylic acid copolymers and acid anhydride-modified products and epoxy-modified products of their derivatives, and combinations thereof.

3. The method for producing a thermoplastic resin composition according to claim 1 or 2, in which (C) crosslinkable elastomer is selected from the group consisting of halogenated butyl rubbers, halogenated isoolefin-paraalkylstyrene copolymers, and combinations thereof.

4. The method for producing a thermoplastic resin composition according to any one of claims 1 to 3, in which (D) polyamide resin is selected from the group consisting of Nylon 6, Nylon 66, Nylon 6/66 copolymer, Nylon 11, Nylon 12, Nylon MXD6, and combinations thereof.

5. The method for producing a thermoplastic resin composition according to any one of claims 1 to 4, in which the amount of (A) acid anhydride-modified or epoxy-modified rubber contained in the thermoplastic resin composition is 70 to 180 parts by weight with respect to 100 parts by weight of (B) ethylene-vinylalcohol copolymer resin.

6. The method for producing a thermoplastic resin composition according to any one of claims 1 to 5, in which the amount of (C) crosslinkable elastomer contained in the thermoplastic resin composition is 70 to 180 parts by weight with respect to 100 parts by weight of (D) polyamide resin.

7. The method for producing a thermoplastic resin composition according to any one of claims 1 to 6, in which the first resin composition and the second resin composition are melt-mixed at a weight ratio of from 90:10 to 10:90.

8. A thermoplastic resin composition produced by the method according to any one of claims 1 to 7.

9. A pneumatic tire using a film comprising the thermoplastic resin composition according to claim 8 in an innerliner.

10. A hose using a film comprising the thermoplastic resin composition according to claim 8 in a gas barrier layer.

## Patentansprüche

1. Verfahren zur Herstellung einer thermoplastischen Harzzusammensetzung, umfassend die Schritte:
(I) Schmelzkneten von (A) Säureanhydrid-modifiziertem oder Epoxy-modifiziertem Kautschuk mit (B) Ethylen-Vinylalkohol-Copolymerharz, um eine erste Harzzusammensetzung herzustellen, in der (A) Säureanhydrid-modifizierter oder Epoxy-modifizierter Kautschuk in (B) Ethylen-Vinylalkohol-Copolymerharz dispergiert ist,
(II) Vernetzen von (C) vernetzbarem Elastomer, während das vernetzbare Elastomer mit (C) Polyamidharz schmelzgeknetet wird, um eine zweite Zusammensetzung herzustellen, in der vernetzte Elastomerteilchen in (D) Polyamidharz dispergiert sind, und
(III) Schmelzmischen der ersten Harzzusammensetzung mit der zweiten Harzzusammensetzung miteinander.

2. Verfahren zur Herstellung einer thermoplastischen Harzzusammensetzung gemäß Anspruch 1, worin (A) Säureanhydrid-modifizierter oder Epoxy-modifizierter Kautschuk ausgewählt aus der Gruppe bestehend aus Ethylen-α-Olefin-Copolymeren und den Säureanhydrid-modifizierten Produkten und Epoxy-modifizierten Produkten ihrer Derivate, Ethylen-ungesättigte Carbonsäure-Copolymere und Säureanhydrid-modifizierten Produkten und Epoxy-modifizierten Produkten ihrer Derivate, und Kombinationen davon.

3. Verfahren zur Herstellung einer thermoplastischen Harzzusammensetzung gemäß Anspruch 1 oder 2, worin (C) vernetzbares Elastomer aus der Gruppe bestehend aus halogenierten Butylkutschauks, halogenierten Isoolefin-Paraalkylstyrol-Copolymeren und Kombinationen davon ausgewählt ist.

4. Verfahren zur Herstellung einer thermoplastischen Harzzusammensetzung gemäß irgendeinem der Ansprüche 1 bis 3, worin (D) Polyamidharz aus der Gruppe bestehend aus Nylon 6, Nylon 66, Nylon 6/66-Copolymer, Nylon 11, Nylon 12, Nylon MXD6 und Kombinationen davon ausgewählt ist.

5. Verfahren zur Herstellung einer thermoplastischen Harzzusammensetzung gemäß irgendeinem der Ansprüche 1 bis 4, worin die Menge von (A) Säureanhydrid-modifiziertem oder Epoxy-modifiziertem Kautschuk, der in der thermoplastischen Harzzusammensetzung enthalten ist, 70 bis 180 Gew.-Teile in Bezug auf 100 Gew.-Teile von (B) Ethylen-Vinylalkohol-Copolymerharz ist.

6. Verfahren zur Herstellung einer thermoplastischen Harzzusammensetzung gemäß irgendeinem der Ansprüche 1 bis 5, worin die Menge von (C) vernetzbarem Elastomer, das in der thermoplastischen Harzzusammensetzung enthalten ist, 70 bis 180 Gew.-Teile in Bezug auf 100 Gew.-Teile von (D) Polyamidharz ist.

7. Verfahren zur Herstellung einer thermoplastischen Harzzusammensetzung gemäß irgendeinem der Ansprüche 1 bis 6, worin die erste Harzzusammensetzung und die zweite Harzzusammensetzung in einem Gewichtsverhältnis von 90:10 bis 10:90 schmelzgemischt werden.

8. Thermoplastischen Harzzusammensetzung, hergestellt durch das Verfahren gemäß irgendeinem der Ansprüche 1 bis 7.

9. Luftreifen, der in einer Innenauskleidung einen Film einsetzt, der die thermoplastische Harzzusammensetzung gemäß Anspruch 8 umfasst.

10. Schlauch, der in einer Gasbarrierenschicht einen Film einsetzt, der die thermoplastische Harzzusammensetzung gemäß Anspruch 8 umfasst.

## Revendications

1. Procédé de production d'une composition de résine thermoplastique, comprenant les étapes de :
(I) faire fondre-malaxer (A) un caoutchouc modifié par un anhydride d'acide ou modifié par l'epoxy avec (B) une résine de copolymère d'éthylène-alcool vinylique pour préparer une première composition de résine dans laquelle (A) le caoutchouc modifié par l'anhydride d'acide ou modifié par l'époxy est dispersé dans la (B) résine de copolymère d'éthylène-alcool vinylique,
(II) réticuler (C) l'élastomère réticulable pendant la fusion-malaxage de l'élastomère réticulable avec (D) une résine de polyamide pour préparer une deuxième composition de résine dans laquelle des particules d'élastomère réticulées sont dispersées dans (D) la résine de polyamide, et
(III) faire fondre-malaxer le première composition de résine avec la deuxième composition de résine.

2. Procédé de production d'une composition de résine thermoplastique selon la revendication 1, dans lequel (A) du caoutchouc modifié par l'anhydride d'acide ou modifié par de l'époxy est sélectionné dans le groupe consistant en copolymères d'éthylène-a-oléfine, et les produits modifiés par l'anhydride d'acide et les produits modifiés par l'époxy de leurs dérivées, des copolymères d'acide carboxylique éthylène- insaturés et les produits modifiés par l'anhydride d'acide et les produits modifiés par l'époxy de leurs dérivées, et leurs combinaisons.

3. Procédé de production d'une résine thermoplastique selon la revendication 1 ou 2, dans lequel (C) un élastomère réticulable est sélectionné dans le groupe consistant en caoutchoucs butyles halogénés, copolymères d'iso-oléfine-para-alkylstyrène halogénés et leurs combinaisons.

4. Procédé de production d'une composition de résine thermoplastique selon l'une quelconque des revendications 1 à 3, dans lequel (D) la résine de polyamide est sélectionnée dans le groupe consistant en Nylon 6, Nylon 66, copolymère de Nylon 6/66, Nylon 11, Nylon 12, Nylon MXD6 et leurs combinaisons.

5. Procédé de production d'une composition de résine thermoplastique selon l'une quelconque des revendications 1 à 4, dans lequel la quantité de (A) caouchouc modifié par l'anhydride d'acide ou modifié par l'époxy se trouvant dans la composition de résine thermoplastique représente 70 à 180 parties en poids par rapport à 100 parties en poids de (B) résine de copolymère d'éthylene-alcool vinylique.

6. Procédé de production d'une composition de résine thermoplastique selon l'une des revendications 1 à 5, dans lequel la quantité de (C) élastomère réticulable se trouvant dans la composition de résine thermoplastique est de 70 à 180 parties en poids par rapport à 100 parties en poids de (D) résine de polyamide.

7. Procédé de production d'une composition de résine thermoplastique selon l'une quelconque des revendications 1 à 6, dans lequel la première composition de résine et la deuxième composition de résine sont amenées à fondre et sont malaxées en un rapport pondéral de 90:10 à 10:90.

8. Composition de résine thermoplastique produite selon le procédé en accord avec l'une quelconque des revendications 1 à 7.

9. Bandage pneumatique utilisant un film comprenant la composition de résine thermoplastique selon la revendication 8 dans un calandrage intérieur.

10. Tuyau souple utilisant un film comprenant la composition de résine thermoplastique selon la revendication 8 dans une couche formant barrière aux gaz.
